# EUROPÄISCHE PATENTANMELDUNG

(11) **EP 2 136 223 A1**
(43) Veröffentlichungstag der Anmeldung: **23.12.2009**
(21) Anmeldenummer: 08010993.7
(22) Anmeldetag: 17.06.2008
(51) Int. Cl.: G01V 8/22

(54) **Verfahren und Vorrichtung zur Erfassung eines Gegenstandes**

(71) Anmelder: SICK AG, 79183 Waldkirch/Breisgau (DE)
(72) Erfinder: Merettig, Gerhard, 79350 Sexau (DE); Fortenbacher, Philipp, 79117 Freiburg (DE)
(74) Vertreter: Manitz, Finsterwald & Partner GbR

(57) **Zusammenfassung**

Die Erfindung betrifft ein Verfahren zur Erfassung eines Gegenstandes (11) in einem Überwachungsbereich, insbesondere zur Erzeugung von Schaltsignalen in Abhängigkeit von der Position des Gegenstandes (11) im Oberwachungsbereich, mittels einer optoelektronischen Vorrichtung, insbesondere einer Lichtschranke, bei dem von zumindest einer Lichtquelle ausgesandte und im Überwachungsbereich reflektierte, remittierte und/oder rückgestreute Lichtstrahlen von wenigstens einer Empfangsanordnung (13) erfasst werden und zumindest ein Gegenstandserfassungssignal, insbesondere ein Schaltsignal, ausgegeben wird, wobei der Lichtquelle wenigstens ein zur Reflexion, Remission und/oder Rückstreuung der ausgesandten Lichtstrahlen ausgebildetes, im Überwachungsbereich angeordnetes und/oder den Überwachungsbereich zumindest teilweise begrenzendes Referenzobjekt (15) zugeordnet wird, das zumindest ein mittels der Empfangsanordnung (13) detektierbares Referenzmerkmal (17,19) aufweist, wobei mittels der Empfangsanordnung (13) ein das Referenzmerkmal (17,19) enthaltendes ortsaufgelöstes Bild des Überwachungsbereiches aufgenommen wird, und wobei das Gegenstandserfassungssignal ausgegeben wird, wenn durch Auswerten des ortsaufgelösten Bildes festgestellt wird, dass sich in dem aufgenommenen Bild ein im Überwachungsbereich befindlicher Gegenstand (11) in einer vorgegebenen Sollposition, insbesondere einer Schaltposition, relativ zu dem Referenzmerkmal (17,19) befindet.

## Beschreibung

Die Erfindung betrifft ein Verfahren zur Erfassung eines Gegenstandes in einem Überwachungsbereich mittels einer optoelektronischen Vorrichtung, insbesondere einer Lichtschranke, bei dem von zumindest einer Lichtquelle ausgesandte und im Überwachungsbereich reflektierte, remittierte und/oder rückgestreute Lichtstrahlen von wenigstens einer Empfangsanordnung erfasst werden und zumindest ein Gegenstandserfassungssignal ausgegeben wird. Die Erfindung betrifft außerdem eine entsprechende Vorrichtung, bei der eine Auswerteeinrichtung vorgesehen ist, die zur Ausgabe des Gegenstandserfassungssignals dient. Des Weiteren betrifft die Erfindung ein Verfahren zum Festlegen wenigstens einer Sollposition. Ferner betrifft die Erfindung eine Verwendung einer derartigen Vorrichtung zur Erzeugung von Schaltsignalen.

Insbesondere in der Lager- und Fördertechnik ist es erforderlich, nicht nur das Vorhandensein eines Transportgutes an sich zu erkennen, sondern es muss darüber hinaus die exakte Position des Transportgutes innerhalb des jeweiligen Überwachungsbereiches detektiert werden. Hintergrund dieser Positionsbestimmung ist, dass in bestimmten Anwendungen dann ein Schaltsignal ausgeben soll, wenn sich ein Gegenstand in einer vorgegebenen Position innerhalb des Überwachungsbereiches befindet. Derartige Positionen werden auch als Schaltpositionen bezeichnet. Es kommt folglich nicht auf das Eindringen eines Gegenstandes in den Überwachungsbereich überhaupt, sondern darauf an, dass das Erreichen der jeweils gewünschten Schaltposition exakt erfasst wird.

Hierfür werden z.B. in bekannter Weise Lichtschranken eingesetzt. Für eine exakte Positionsbestimmung ist es erforderlich, die Lichtschranke bzw. den Lichtstrahl genau auszurichten.

Es ist bekannt, die exakte Ausrichtung einer Lichtschranke entweder bei deren Inbetriebnahme oder bei einer nachträglichen Korrektur auf mechanischem Wege mittels einer Montagehilfe vorzunehmen. Derartige Montagehilfen sind beispielsweise Langloch- oder Kugelkopfbefestigungen. Im Anschluss an die korrekte Ausrichtung der Lichtschranke muss diese in der gefundenen Stellung möglichst gut fixiert werden.

Das Dilemma derartiger mechanischer Ausrichthilfen ist, dass diese einerseits eine sehr genaue Ausrichtung ermöglichen müssen, andererseits sich eine einmal eingestellte Position nicht mehr verändern darf. Weder bei der eigentlichen Fixierung im Anschluss an die Ausrichtung noch im Falle späterer Einflüsse wie beispielweise Erschütterungen darf sich die eingestellte Ausrichtung verändern. Außerdem wird an die Ausrichthilfen die Anforderung gestellt, dass eine nachträgliche Veränderung in möglichst kleinen Schritten durchführbar sein soll.

Es hat sich gezeigt, dass mechanische Lösungen den oben genannten Anforderungen nicht optimal gerecht werden können. Hinzu kommt, dass nicht nur ein erfahrener Monteur benötigt wird, um die Ausrichtung einer Lichtschranke mittels mechanischer Ausrichthilfen vorzunehmen, sondern dass dieser Monteur darüber hinaus verhältnismäßig viel Zeit für die Ausrichtung benötigt. Nachteilig ist ferner, dass für jede Veränderung der Ausrichtung die gesamte Einstellprozedur erneut durchgeführt werden muss.

Des Weiteren ist zu berücksichtigen, dass in der Praxis unter bestimmten Bedingungen Lichtschranken ganz oder teilweise ersetzt werden müssen. Da sich selbst prinzipiell baugleiche Lichtschranken tatsächlich insbesondere hinsichtlich des so genannten Schielwinkels voneinander unterscheiden können, muss bei jedem Austausch der gesamte Ausrichtvorgang erneut durchgeführt werden. Schließlich werden durch die mechanischen Komponenten, die für die mechanische Ausrichtung benötigt werden, die Systemkosten in nicht unerheblicher Weise erhöht.

Aus der DE 10 2005 060 399 A1 sind ein Verfahren und eine Vorrichtung zu Detektion eines Gegenstandes bekannt. Mittels eines Empfängers wird das Bild eines Reflektors ausgewertet, um das Eindringen eines Gegenstandes in einen Schutzbereich zu erfassen. Das Dokument erwähnt, dass bei dieser Auswertung des erfassten Reflektorbildes auch die Form, die Lage oder spezielle Codierungen des Reflektorbildes berücksichtigt werden können. Primär ist diese Druckschrift jedoch darauf gerichtet, das Reflektorbild von einem Störlichtobjekt zu unterscheiden. Hierzu wird eine Bewegung des Störlichtobjektes auf dem Empfänger ermittelt. Über die generelle Aussage, dass bei dieser bekannten Vorgehensweise ein Gegenstandserfassungssignal dann erzeugt wird, wenn aufgrund der Auswertung des Reflektorbildes eine Unterbrechung des ausgesandten Lichts erkannt wird, und über die bloße Erwähnung von den Gegenstand betreffenden Positionsbestimmungen geht dieses Dokument allerdings nicht hinaus. Insbesondere werden weder die vorstehend erläuterte Problematik des Ausrichtens von Lichtschranken noch generell die Bestimmung exakter Schaltpositionen zur Ausgabe von Schaltsignalen erwähnt.

Aufgabe der Erfindung ist es, bei optoelektronischen Vorrichtungen der eingangs genannten Art eine verbesserte Möglichkeit zur exakten Bestimmung der Positionen von Gegenständen in einem Überwachungsbereich und insbesondere zur Ausrichtung der Vorrichtung zu schaffen.

Ausgehend von einem Verfahren der eingangs genannten Art wird diese Aufgabe erfindungsgemäß dadurch gelöst, dass der Lichtquelle wenigstens ein zur Reflexion, Remission und/oder Rückstreuung der ausgesandten Lichtstrahlen ausgebildetes, im Überwachungsbereich angeordnetes und/oder den Überwachungsbereich zumindest teilweise begrenzendes Referenzobjekt zugeordnet wird, das zumindest ein mittels der Empfangsanordnung detektierbares Referenzmerkmal aufweist, dass mittels der Empfangsanordnung ein das Referenzmerkmal enthaltendes ortsaufgelöstes Bild des Überwachungsbereiches aufgenommen wird, und dass das Gegenstandserfassungssignal ausgegeben wird, wenn durch Auswerten des ortsaufgelösten Bildes festgestellt wird, dass sich in dem aufgenommenen Bild ein im Überwachungsbereich befindlicher Gegenstand in einer vorgegebenen Sollposition relativ zu dem Referenzmerkmal befindet.

Die Erfindung verlässt folglich den Weg einer mechanischen Ausrichtung der Vorrichtung. Vielmehr erfolgt erfindungsgemäß eine Positionsbestimmung elektronisch bzw. softwaremäßig durch Auswerten eines das Referenzmerkmal des Referenzobjektes enthaltenden ortsaufgelösten Bildes des Überwachungsbereiches. Dabei wird erfindungsgemäß auf die Position des Bildes des Gegenstandes relativ zu dem Bild des Referenzmerkmales abgestellt. Es wird also in dem aufgenommenen ortsaufgelösten Bild eine Überprüfung durchgeführt, ob sich der Gegenstand in der jeweils vorgegebenen Sollposition relativ zu dem Referenzmerkmal befindet oder nicht. Hierbei wird durch die Erfindung der Umstand ausgenutzt, dass die Relativlage des Gegenstandes einerseits und des Referenzmerkmals andererseits in dem aufgenommenen Bild unabhängig von der tatsächlichen Position der Empfangsanordnung relativ zu dem Referenzobjekt im Raum ist.

Positionsänderungen der Empfangsanordnung relativ zu dem Referenzobjekt haben somit keine Auswirkungen auf die Relativpositionen des Gegenstandsbildes und des Referenzmerkmalsbildes in dem aufgenommenen Bild, wenn die Position des Referenzobjektes und damit des Referenzmerkmals im Raum unverändert bleibt.

Mit der Erfindung kann aber auch eine Änderung der - an sich als unveränderlich vorausgesetzten - Position des Referenzmerkmals erkannt werden, wenn dafür die Position der Empfangsanordnung als unverändert vorausgesetzt wird, da sich eine Positionsänderung des Referenzmerkmals in einer Verschiebung des Bildes des Referenzmerkmals in dem mittels der Empfangsanordnung aufgenommenen Bild bemerkbar macht und somit durch Auswerten des Bildes detektierbar ist.

Der herkömmlichen Ausrichtung einer Lichtschranke entspricht bei der Erfindung somit die Festlegung einer empfangsseitigen Referenz mittels des Referenzmerkmals derart, dass sich die während des Betriebs vorgenommenen Positionsbestimmungen auf das Referenzmerkmal beziehen können. Um während des Betriebs tatsächlich gemessene Positionen von Gegenständen im Überwachungsbereich auf das Referenzmerkmal beziehen und somit Aussagen über die tatsächliche Lage der Gegenstände im Raum und insbesondere dahingehend treffen zu können, ob sich ein Gegenstand in einer vorgegebenen Sollposition befindet oder nicht, müssen die Position des Referenzmerkmals und die Sollposition zunächst festgelegt oder eingestellt, d.h. der Vorrichtung bzw. einer Auswerteeinrichtung "mitgeteilt" werden. Dies kann z.B. durch Einlernen der Vorrichtung ("teaching") erfolgen. Alternativ kann das Einstellen durch Sollwertvorgabe (z.B. mittels wenigstens eines Potentiometers), an einem relativ einfach gehaltenen Terminal oder über eine Schnittstelle zu einer übergeordneten Einheit (z.B. einer SPS (speicherprogammierbare Steuerung) oder einer Leitebene) erfolgen. Ein besonderer Vorteil der Erfindung besteht gerade darin, dass die elektronische bzw. softwaremäßige "Ausrichtung" bzw. Einstellung - anders als die herkömmliche mechanische Justierung - prinzipiell von einem beliebigen Ort aus erfolgen kann, wobei insbesondere die benötigten Einstellwerte z.B. in der SPS oder in der Leitebene gespeichert und beispielsweise bei einem Wechsel der Vorrichtung erneut herunter geladen werden können. Dabei können bekannte Kommunikationsschnittstellen Verwendung finden.

Die erwähnte Festlegung oder Einstellung der Position des Referenzmerkmals und wenigstens einer Sollposition relativ zu dem Referenzmerkmal auf elektronischem bzw. softwaremäßigem Wege unter Ausnutzung des mittels der Empfangsanordnung aufgenommenen Bildes stellt einen unabhängigen Aspekt der Erfindung dar.

Insbesondere betrifft dieser Aspekt ein Verfahren zum Festlegen wenigstens einer, insbesondere als Schaltposition dienenden, Sollposition zumindest eines sich in dem Überwachungsbereich einer optoelektronischen Vorrichtung der hier angegebenen Art, insbesondere einer Lichtschranke, befindlichen Gegenstandes, bei dem die Sollposition in dem mittels der Empfangsanordnung aufgenommenen Bild als die Lage des Gegenstandes relativ zu dem Referenzmerkmal festgelegt wird.

Bei der während des Betriebs erfolgenden Auswertung des Bildes kommt es auf die genaue tatsächliche Lage der Empfangsanordnung im Raum relativ zu dem Referenzmerkmal nicht an, da alle relevanten Vorgänge im aufgenommenen Bild vorgenommen, d.h. alleine durch Auswerten des Bildes erledigt werden. Die Empfangsanordnung muss lediglich in Abhängigkeit von den sonstigen Bedingungen derart relativ zum Referenzobjekt positioniert werden, dass eine sich auf das Referenzmerkmal beziehende Bildauswertung überhaupt möglich ist.

Bei dem Referenzobjekt kann es sich um einen Reflektor handeln, der im Sichtbereich der Empfangsanordnung angeordnet ist. Als Referenzmerkmal kann z.B. eine Kante des Reflektors dienen. Bei der Auswertung der Gegenstandspositionen wird dann auf die betreffende Reflektorkante referenziert. Sobald ein bestimmter Abstand des in den Überwachungsbereich eindringenden Gegenstandes bzw. eines vorgegebenen Merkmals dieses Gegenstandes zu der Reflektorkante erreicht bzw. über- oder unterschritten wird, wird dies durch das fortlaufende Auswerten des mittels der Empfangsanordnung aufgenommenen ortsaufgelösten Bildes erkannt, woraufhin das Gegenstandserfassungssignal ausgegeben wird.

Der Reflektor ist beispielsweise fest mit einer Komponente einer Maschine oder Einrichtung verbunden, an der die optoelektronische Vorrichtung, bei der es sich insbesondere um eine Lichtschranke handelt, eingesetzt wird.

Anstelle eines Reflektors kann beispielweise ein speziell ausgebildeter Hintergrund als Referenzobjekt dienen. Dieser Hintergrund ist insbesondere möglichst stark remittierend und vorzugsweise zusätzlich farblich strukturiert ausgebildet. Es kann sich beispielsweise um ein weißes Quadrat auf schwarzer Fläche handeln. Dieser Hintergrund kann eine zusätzliche Strukturierung aufweisen. Beispielsweise ist das erwähnte weiße Quadrat zusätzlich mit schwarzen Punkten versehen. Generell erfolgt die Ausgestaltung des Referenzobjektes mit dem Ziel, in dem mittels der Empfangsanordnung aufgenommenen Bild das Referenzobjekt sowohl von der Umgebung als auch von den erwarteten Gegenständen möglichst gut unterscheiden zu können. Generell kann eine wie auch immer geartete Codierung eines im Sinne der Erfindung dann als Referenzobjekt dienenden Teils des Sichtbereiches der Empfangsanordnung als erfindungsgemäßes Referenzmerkmal dienen.

Damit die erfindungsgemäße Positionsbestimmung gegenüber Positionsänderungen der Empfangsanordnung relativ zum Referenzobjekt tolerant ist, ist gemäß einer bevorzugten Weiterbildung der Erfindung vorgesehen, dass die Empfangsanordnung und das Referenzobjekt derart ausgelegt und/oder relativ zueinander ausgerichtet werden, dass zumindest bezüglich einer Richtung, in der ein Eindringen eines Gegenstandes in den Überwachungsbereich erwartet wird, in dem mittels der Empfangsanordnung aufgenommenen Bild des Überwachungsbereiches das Referenzmerkmal von einem Rand des Bildes entfernt gelegen ist.

Durch einen ausreichend groß gewählten Abstand zwischen dem Bild des Referenzmerkmals und dem Rand des aufgenommenen Bildes kann sichergestellt werden, dass zu einer Veränderung der Position der Empfangsanordnung relativ zu dem Referenzobjekt führende Einflüsse, z.B. Erschütterungen, keinen nachteiligen Einfluss auf die erfindungsgemäße Positionsbestimmung haben.

In einer relativ einfachen Ausgestaltung der Erfindung wird dafür gesorgt, dass bezüglich jeder Richtung das Bild des Referenzmerkmals innerhalb des insgesamt mittels der Empfangsanordnung aufnehmbaren Bildes liegt, dass also allseitig ein ausreichender Randabstand vorhanden ist. Während bei einer herkömmlichen Reflexionslichtschranke der Reflektor in der Regel größer gewählt wird als der Sendelichtstrahl, um für nachträgliche Positionsveränderungen zum Anpassen der Schaltposition ausreichend Spielraum zu haben, kann erfindungsgemäß abweichend hiervon mit einem Sendestrahl gearbeitet werden, der bezüglich jeder Richtung größer ist als der Reflektor, so dass der Reflektor allseitig überstrahlt wird. Dabei kann außerdem die Sende-/Empfangsöffnung der Lichtschranke größer gewählt werden als bei einer entsprechenden herkömmlichen Reflexionslichtschranke.

Vorzugsweise ist als Empfangsanordnung ein wenigstens eindimensionales Array von individuell auswertbaren Empfangselementen vorgesehen, bei denen es sich beispielsweise jeweils um eine Fotodiode handelt. Die einzelnen Empfangselemente bzw. Fotodioden werden auch als Subpixel bezeichnet. Das aufgenommene Bild wird für die erfindungsgemäße Positionsbestimmung hinsichtlich der Verteilung des reflektierten, remittierten und/oder rückgestreuten Lichtes auf diesem Empfängerarray ausgewertet.

Gemäß einer Weiterbildung der Erfindung können die erwähnten Empfangselemente zu einer Vielzahl von individuell auswertbaren Gruppen zusammengefasst werden. Diese Gruppen werden auch als Makropixel bezeichnet. Hierbei wird das aufgenommene Bild zusätzlich hinsichtlich der Lichtverteilung jeweils innerhalb der Gruppen ausgewertet. Die Zusammenfassung der einzelnen Empfangselemente zu Gruppen, d.h. der Subpixel zu Makropixeln, kann durch die Verwendung geeigneter optischer Elemente, auf die nachstehend näher eingegangen wird, derart erfolgen, dass die Lichtverteilung innerhalb der Makropixel jeweils zusätzliche Informationen über den Verlauf der Lichtstrahlen, also über den Strahlengang, innerhalb des Überwachungsbereiches enthält. Diese zusätzlichen Informationen können für eine differenziertere Auswertung der Situation im Überwachungsbereich bei Vorliegen eines oder mehrerer Gegenstände genutzt werden, um auf diese Weise komplexere Anwendungen realisieren zu können.

Gemäß einer möglichen konkreten erfindungsgemäßen Vorgehensweise wird im Überwachungsbereich ein zumindest im Wesentlichen kollimierter Strahlengang erzeugt, wobei auch ein leicht divergenter oder leicht konvergenter Lichtstrahl verwendet werden kann. Die hierbei zumindest im Wesentlichen gegebene Parallelität der Lichtstrahlen im Überwachungsbereich hat zur Folge, dass zwischen Gegenständen, die bei gleicher Eindringtiefe in den Überwachungsbereich unterschiedliche Abstände zur Empfangsanordnung aufweisen, nicht unterschieden werden kann.

Alternativ kann erfindungsgemäß im Überwachungsbereich ein Strahlengang erzeugt werden, bei dem die Lichtverteilung auf der Empfangsanordnung von der Lage des Gegenstandes entlang der optischen Achse der Vorrichtung abhängig ist, d.h. zwischen Gegenständen, die bei gleicher Eindringtiefe in den Überwachungsbereich unterschiedliche Abstände zur Empfangsanordnung aufweisen, unterschieden werden kann.

Die erfindungsgemäße elektronische bzw. softwaremäßige Festlegung von Sollpositionen durch Referenzierung auf ein Referenzmerkmal in dem mittels der Empfangsanordnung aufgenommenen Bild hat unter anderem den Vorteil, dass auf sehr einfache Art und Weise mehrere unterschiedliche Sollpositionen vorgegeben werden können. So ist gemäß einem weiteren Ausführungsbeispiel der Erfindung vorgesehen, dass für jede dieser unterschiedlichen vorgegebenen Sollpositionen ein Gegenstandserfassungssignal ausgegeben wird. Die Ausgabe dieser Signale erfolgt bevorzugt derart, dass zwischen den Sollpositionen unterschieden werden kann. Diese Unterscheidung kann beispielsweise durch unterschiedliche Gegenstandserfassungssignale erfolgen. Alternativ oder zusätzlich kann vorgesehen sein, dass die Empfangsanordnung oder eine mit der Empfangsanordnung verbundene Auswerteeinrichtung mehrere Schaltausgänge aufweist, denen jeweils wenigstens eine der vorgegebenen Sollpositionen zugeordnet ist. Hierdurch ermöglicht die Erfindung die Realisierung komplexer Schalt- bzw. Steuerungsszenarien bei Einsatz einer erfindungsgemäßen optoelektronischen Vorrichtung innerhalb einer bestimmten Maschinenumgebung.

Die vorgegebenen Sollpositionen können sich hinsichtlich ihrer Lage entlang einer optischen Achse der Vorrichtung und/oder hinsichtlich ihrer Lage entlang einer senkrecht zur optischen Achse der Vorrichtung verlaufenden Achse voneinander unterscheiden. In den Überwachungsbereich eindringende Gegenstände können somit hinsichtlich ihres Abstandes von der Empfangsanordnung und/oder hinsichtlich der Eindringtiefe voneinander unterschieden werden.

Gemäß einer weiteren vorteilhaften Ausgestaltung der Erfindung ist vorgesehen, dass das mittels der Empfangsanordnung aufgenommene ortsaufgelöste Bild hinsichtlich wenigstens einer weiteren, mittels der Empfangsanordnung detektierbaren Eigenschaft des Gegenstandes ausgewertet wird. Bei dieser weiteren Eigenschaft des Gegenstandes kann es sich beispielsweise um dessen Form und/oder Größe handeln. Dabei kann die bei der Auswertung des Bildes getroffene Feststellung, dass der Gegenstand wenigstens eine der vorgegebenen Eigenschaften aufweist, eine zusätzliche Bedingung für die Ausgabe eines Gegenstandserfassungssignals sein. So kann beispielsweise vorgesehen werden, dass ein Gegenstandserfassungssignal nur dann ausgegeben wird, wenn in dem aufgenommenen Bild eine vordere Kante eines in den Überwachungsbereich eindringenden Gegenstandes einen bestimmten Abstand vom Referenzmerkmal aufweist und gleichzeitig auch eine detektierbare hintere Kante des Gegenstandes einen bestimmten Abstand vom Referenzmerkmal überschreitet oder unterschreitet. Auf diese Weise können eine bestimmte Höhe oder Dicke bzw. bestimmte Höhen- oder Dickenbereiche von Gegenständen vorgegeben werden, für die ein Gegenstandserfassungssignal ausgegeben wird, sobald sich diese Gegenstände in einer vorgegebenen Position befinden. So kann beispielsweise bei der Auswertung des Bildes zwischen dicken und dünnen Gegenständen unterschieden werden, die sich hinsichtlich der Eindringtiefe in den Überwachungsbereich nicht voneinander unterscheiden.

Die eingangs genannte Aufgabe der Erfindung wird ausgehend von einer optoelektronischen Vorrichtung der eingangs genannten Art dadurch gelöst, dass die Empfangsanordnung dazu ausgebildet ist, ein ortsaufgelöstes Bild des Überwachungsbereiches aufzunehmen, wobei das Bild ein Referenzmerkmal eines zur Reflexion, Remission und/oder Rückstreuung der ausgesandten Lichtstrahlen ausgebildeten, im Überwachungsbereich angeordneten und/oder den Überwachungsbereich zumindest teilweise begrenzenden Referenzobjektes enthält, und dass die Auswerteeinrichtung dazu ausgelegt ist, in dem aufgenommenen Bild die Position eines im Überwachungsbereich befindlichen Gegenstandes relativ zu dem Referenzmerkmal zu bestimmen und das Gegenstandserfassungssignal auszugeben, wenn festgestellt wird, dass sich der Gegenstand in einer vorgegebenen Sollposition relativ zu dem Referenzmerkmal befindet.

Die Vorrichtung ist insbesondere gemäß den hier angegebenen Verfahren zur Erfassung von Gegenständen bzw. zur Festlegung von Sollpositionen betreibbar.

Die Empfangsanordnung umfasst bevorzugt wenigstens einen ortsauflösenden Empfänger, der eine ein- oder zweidimensionale Anordnung einer Vielzahl von individuell auswertbaren Empfangselementen aufweist.

Die Empfangselemente können zu einer Vielzahl von individuell auswertbaren Gruppen zusammengefasst sein, wobei insbesondere die Gruppen zusätzlich jeweils hinsichtlich der Lichtverteilung auf den die jeweilige Gruppe bildenden Empfangselementen auswertbar sind.

Zur Bildung der Gruppen kann eine Anordnung von Mikrolinsen vorgesehen sein, die jeweils einer Mehrzahl von Empfangselementen zugeordnet sind. Hinsichtlich derartiger Mikrolinsen wird auf die veröffentlichte Patentanmeldung DE 10 2006 007 764 A1 der Anmelderin verwiesen.

Bei der optoelektronischen Vorrichtung handelt es sich beispielsweise um eine Lichtschranke. Generell ist die Erfindung jedoch auch in Verbindung mit anderen optoelektronischen Vorrichtungen einsetzbar, beispielsweise generell in Verbindung mit Vision-Systemen.

Weitere vorteilhafte Ausgestaltungen der Erfindung sind in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine Darstellung zur Erläuterung des erfindungsgemäßen Prinzips,
- Fig. 2: eine erfindungsgemäße Anordnung mit kollimiertem Strahlengang,
- Fig. 3: eine erfindungsgemäße Anordnung mit einem alternativen Strahlengang,
- Fig. 4 und 5: jeweils eine erfindungsgemäße Anordnung in zwei unterschiedlichen Gegenstandssituationen, und
- Fig. 6: eine Darstellung zur Erläuterung weiterer erfindungsgemäßer Anwendungen.

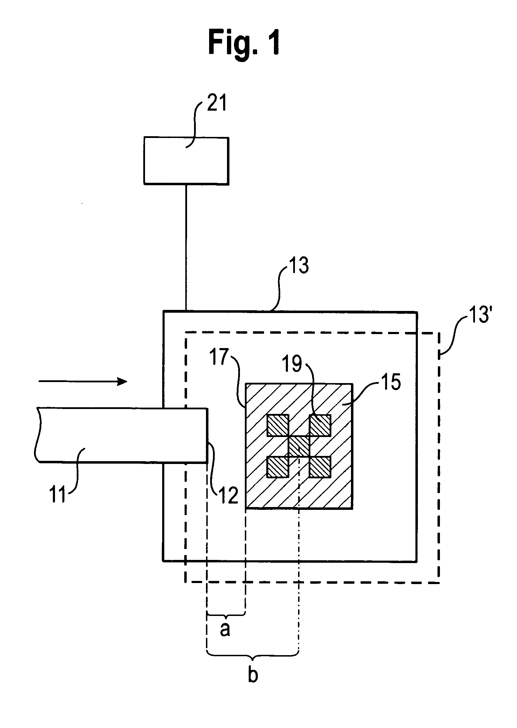

In Fig. 1 ist angedeutet, wie ein Teil des Überwachungsbereiches von einer erfindungsgemäßen Empfangsanordnung 13 "gesehen" wird. Das insgesamt mittels der Empfangsanordnung 13 aufnehmbare Bild entspricht hier der Größe der Empfangsanordnung 13.

Ebenfalls dargestellt ist das Bild eines im Überwachungsbereich angeordneten Referenzobjektes 15, beispielsweise eines Reflektors. Das Referenzobjekt 15 besitzt eine quadratische Form. Als Referenzmerkmal dient die in Fig. 1 linke Kante 17 des Referenzobjektes 15. Wie Fig. 1 außerdem zeigt, kann das Referenzobjekt 15 zusätzlich mit einer Codierung 19 versehen sein, die in diesem Beispiel in Form einer speziellen Anordnung von fünf kleineren Quadraten vorgesehen ist. Eine solche Codierung 19 kann alternativ oder zusätzlich zu der Kante 17 als Referenzmerkmal bei der Auswertung des mittels der Empfangsanordnung 13 aufnehmbaren Bildes dienen.

Das Referenzobjekt 15 und insbesondere dessen Referenzmerkmale 17 (Kante) und 19 (Codierung) sind sowohl in Bezug auf die ebenfalls von der Empfangsanordnung 13 "gesehene" Umgebung als auch in Bezug auf einen zu detektierenden Gegenstand 11 derart ausgebildet, dass die Referenzmerkmale 17, 19 bei der Auswertung des Bildes eindeutig identifiziert werden können.

Gemäß Fig. 1 dringt der Gegenstand 11 in Pfeilrichtung in den Überwachungsbereich ein. Die vordere Kante 12 des Gegenstandes 11 wird auf Bildes detektiert. In Fig. 1 befindet sich die Gegenstandskante 12 in einem Abstand a von der Kante 17 des Referenzobjektes 15 und in einem Abstand b von der Mitte der Codierung 19 des Referenzobjektes 15.

In einer bestimmten Anwendung kann zumindest einer dieser Abstände a, b als Sollposition des Gegenstandes 11 relativ zu dem Referenzmerkmal 17 bzw. 19 des Referenzobjektes 15 vorgegeben werden, und sobald bei der Auswertung des mittels der Empfangsanordnung 13 aufgenommenen Bildes festgestellt wird, dass sich die vordere Kante 12 des Gegenstandes 11 in dem betreffenden Abstand a bzw. b von dem Referenzmerkmal 17 bzw. 19 befindet, kann mittels einer an die Empfangsanordnung 13 angeschlossenen Auswerteeinrichtung 21 ein Gegenstandserfassungssignal ausgegeben werden, um beispielsweise einen Schaltvorgang auszulösen.

Die dem Abstand a bzw. b entsprechende Sollposition des Gegenstandes 11 relativ zum Referenzobjekt 15 ist in diesem Fall somit eine Schaltposition, die so exakt wie möglich bestimmt werden muss, um einen optimalen Betrieb der jeweiligen Maschine oder Einrichtung zu gewährleisten, an welcher die die Empfangsanordnung 13 umfassende Lichtschranke oder andere optoelektronische Vorrichtung eingesetzt wird.

Kommt es zu einer unbeabsichtigten Positionsänderung der Empfangsanordnung 13 relativ zu dem ortsfest, z.B. an der Maschine oder Einrichtung, angebrachten Referenzobjekt 15, so ist Fig. 1 zu entnehmen, dass trotz dieser Positionsveränderung weiterhin eine exakte Bestimmung der Schaltposition möglich ist, da sich hierdurch an dem von der Empfangsanordnung 13 "gesehenen" Bild des Überwachungsbereiches nichts ändert.

Die veränderte Position ist durch die gestrichelt dargestellte Empfangsanordnung 13' angedeutet. Die Relativlage zwischen Empfangsanordnung 13' und Referenzobjekt 15 hat sich gegenüber dem ursprünglichen Zustand geändert. Nicht geändert hat sich dagegen die Relativlage zwischen eindringendem Gegenstand 11 und Referenzobjekt 15, und da es diese Relativlage zwischen Gegenstand 11 und Referenzobjekt 15 bzw. Referenzmerkmal 17 bzw. 19 ist, die mittels der Empfangsanordnung 13' in dem mittels der Empfangsanordnung 13' aufgenommenen Bild ausgewertet wird, ist der bei dieser Auswertung bestimmte Abstand a bzw. b invariant gegenüber Positionsveränderungen der Empfangsanordnung 13', solange diese Positionsveränderungen ein bestimmtes Maß nicht überschreiten.

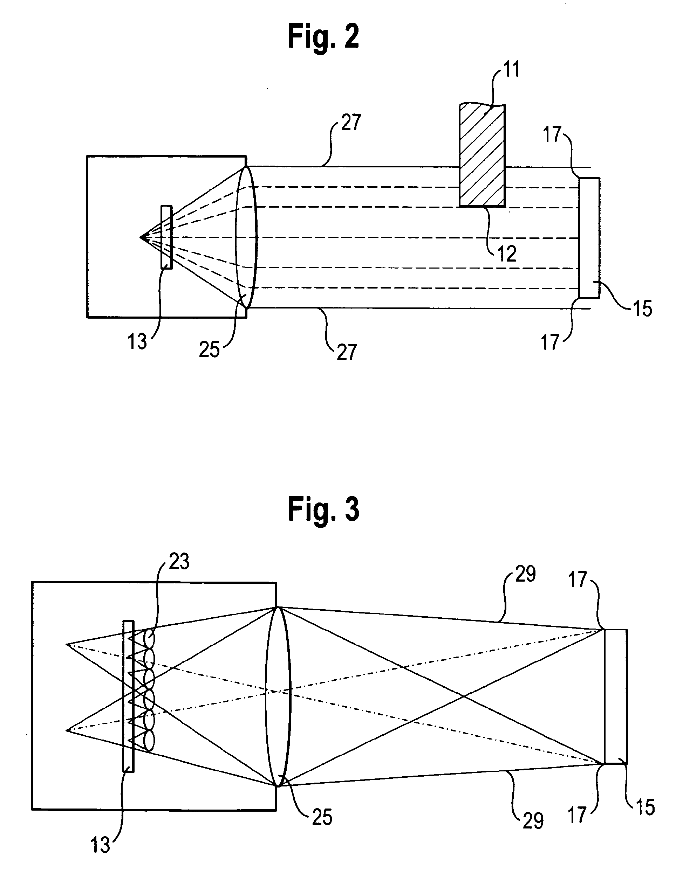

In Fig. 2 ist eine mögliche Ausgestaltung einer erfindungsgemäßen Lichtschranke dargestellt, bei der ein zumindest weitgehend kollimierter Strahlengang vorgesehen ist. Die zumindest weitgehend parallelen Lichtstrahlen sind durch gestrichelte Linien angedeutet, wobei die Randstrahlen 27 des ausgesandten Lichtes mit durchgezogenen Linien dargestellt sind.

Es ist zu erkennen, dass ein im Überwachungsbereich angeordneter, als Referenzobjekt dienender Reflektor 15 kleiner ist als der durch die Randstrahlen 27 begrenzte ausgesandte Lichtstrahl, d.h. der Reflektor 15 wird von dem ausgesandten Licht überstrahlt.

Das vom Reflektor 15 reflektierte Licht wird von einer einer Empfangsanordnung 13 zugeordneten Empfängerlinse 25 fokussiert und von einem zweidimensionalen Array aus nicht dargestellten Empfangselementen, beispielsweise Fotodioden, empfangen. Die Verteilung des empfangenen Lichtes auf diesem Empfängerarray wird ausgewertet. Ein in den Überwachungsbereich eindringender Gegenstand 11 unterbricht einen Teil der im Wesentlichen parallel verlaufenden Lichtstrahlen. Die Eindringtiefe des Gegenstandes 11 und somit die Lage der vorderen Kante 12 des Gegenstandes relativ zu einer der Kanten 17 des Reflektors 15 kann durch Auswerten des Empfängerarrays bestimmt werden, da auf diejenigen Empfangselemente des Empfängerarrays kein Licht fällt, auf welche die bei Nichtvorhandensein des Gegenstandes 11 ungestörten Lichtstrahlen fallen würden.

Der Abstand des Gegenstandes 11 von der Empfangsanordnung 13 hat allerdings aufgrund des kollimierten Strahlenganges in dieser Ausführungsform keinen relevanten Einfluss auf das mittels der Empfangsanordnung 13 aufgenommene Bild, d.h. Verschiebungen des Gegenstandes 11 längs der optischen Achse des Systems bei gleicher Eindringtiefe haben keinen Einfluss darauf, wie der Überwachungsbereich von der Empfangsanordnung 13 "gesehen" wird.

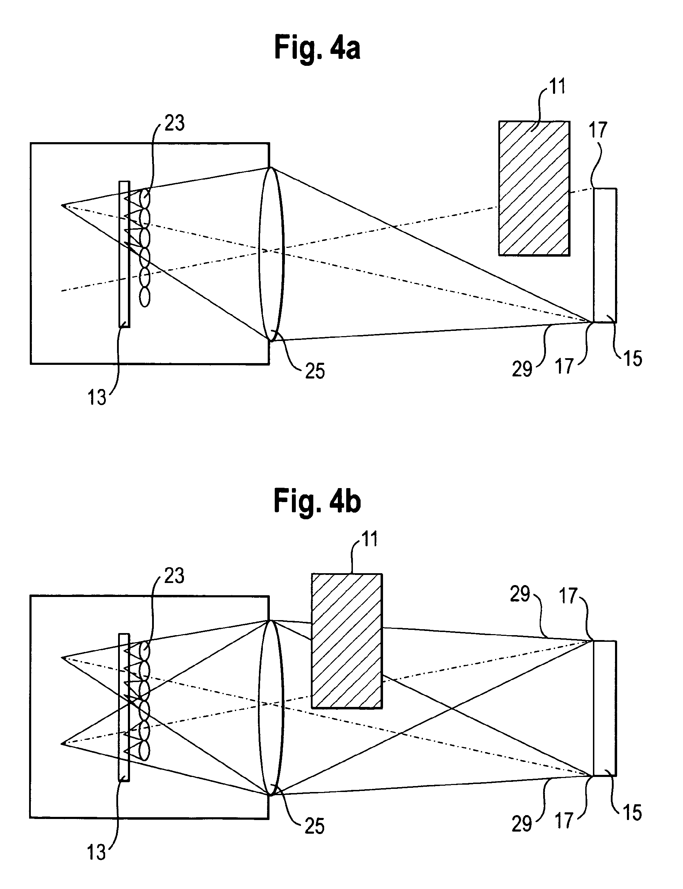

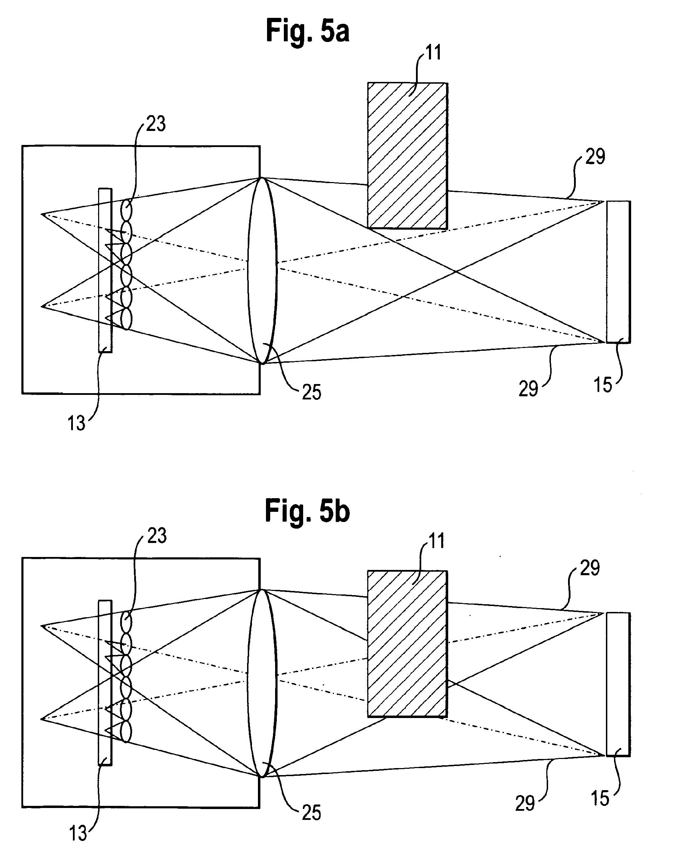

Anders ist dies mit einer alternativen erfindungsgemäßen Ausgestaltung der Lichtschranke, wie sie in Fig. 3 dargestellt ist und nachstehend anhand der Fig. 4 und 5 näher erläutert wird.

Bei der Ausführungsform gemäß Fig. 3 wird zum einen nicht mit einem kollimierten Strahlengang gearbeitet. Dies bedeutet, dass von jedem Punkt des Reflektors 15 das Licht in alle Richtungen ausgeht. Zur Vereinfachung der Darstellung sind in Fig. 3 nur diejenigen Lichtstrahlen (Kantenstrahlen 29) eingezeichnet, die von den Kanten 17 des Reflektors 15 ausgehen. Bei der konkreten Umsetzung dieser Ausführungsform wird eine möglichst kontinuierliche Strahlverteilung angestrebt, bei welcher der Reflektor 15 allseitig überstrahlt wird. Anstelle eines Reflektors 15 kann auch ein remittierendes Referenzobjekt verwendet werden.

Zum anderen ist der Empfangsanordnung 13 ein Array aus Mikrolinsen 23 zugeordnet. Gemäß einer bevorzugten Terminologie werden die einzelnen Empfangselemente des Empfängerarrays der Empfangsanordnung 13 als Subpixel bezeichnet, während Gruppen von Subpixeln, die jeweils einer der Mikrolinsen 23 zugeordnet sind, als Makropixel bezeichnet werden.

Das aus dem Überwachungsbereich stammende Licht wird von jeder Mikrolinse 23 auf das ihr zugeordnete, jeweils aus einer Mehrzahl von Subpixeln der Empfangsanordnung 13 bestehende Makropixel gelenkt, wie es in Fig. 3 durch die von den Mikrolinsen 23 ausgehenden Strahlengänge jeweils schematisch angedeutet ist. Von Bedeutung ist, dass die Lichtverteilung innerhalb der Makropixel von dem Strahlenverlauf im Überwachungsbereich abhängig ist. Aus der Auswertung des mittels der Empfangsanordnung 13 aufgenommenen Bildes, d.h. aus der Auswertung der Subpixel und zusätzlich der Lichtverteilungen innerhalb der Makropixel, können Rückschlüsse auf die Gegenstandssituation im Überwachungsbereich gezogen werden.

Sich mit einer Anordnung gemäß Fig. 3 ergebende Auswertemöglichkeiten werden nachstehend anhand der Fig. 4 und 5 erläutert.

Fig. 4 zeigt zwei Situationen mit einem Gegenstand 11 gleicher Eindringtiefe, wobei der Gegenstand 11 sich in dem ersten Fall (Fig. 4a) nahe des Reflektors 15 und in dem zweiten Fall (Fig. 4b) nahe der Empfangsanordnung 13 befindet. Die von der oberen Kante 17 des Reflektors 15 ausgehenden Lichtstrahlen sind durch den reflektornahen Gegenstand 11 blockiert, so dass - wie ein Vergleich mit Fig. 3 zeigt - die entsprechenden Makropixel und deren zugeordneten Subpixel von dieser oberen Kante 17 kein Licht erhalten. Anders ist dies bei dem näher an der Empfangsanordnung 13 liegenden Gegenstand 11 gemäß Fig. 4b. Hier sind jeweils die von beiden Kanten 17 des Reflektors 15 ausgehenden Lichtstrahlen teilweise durch den Gegenstand 11 blockiert. Dadurch ergibt sich eine andere Lichtverteilung auf den über die Mikrolinsen 23 beaufschlagten Subpixeln der Empfangsanordnung 13. Die Auswertung dieser Lichtverteilung erlaubt nicht nur eine Bestimmung der Eindringtiefe des Gegenstandes 11, sondern auch des Abstandes des Gegenstandes 11 von der Empfangsanordnung 13.

Fig. 5 zeigt zwei Situationen mit sich in gleichem Abstand von der Empfangsanordnung 13 befindendem Gegenstand 11, wobei jedoch im Fall der Fig. 5a die Eindringtiefe kleiner ist als im Fall der Fig. 5b. Aus dem Vergleich von Fig. 5a und Fig. 5b wird deutlich, dass die von der Eindringtiefe abhängige unterschiedliche Beeinflussung des Strahlverlaufes innerhalb des Überwachungsbereiches bei ansonsten gleichbleibenden Bedingungen zu unterschiedlichen Lichtverteilungen auf den über die Mikrolinsen 23 mit Licht beaufschlagten Subpixeln der Empfangsanordnung 13 führt.

Aus den Darstellungen in Fig. 4 und Fig. 5 ist außerdem ersichtlich, dass sich unterschiedliche Lichtverteilungen auf der Empfangsanordnung 13 nicht nur durch unterschiedliche Positionen des gleichen Gegenstandes 11 im Überwachungsbereich ergeben, sondern dass der Strahlverlauf innerhalb des Überwachungsbereiches und damit eine sich daraus ergebende Lichtverteilung auf der Empfangsanordnung 13 auch von anderen Umständen abhängig ist. Ein Beispiel hierfür sind die Form und die Größe des Gegenstandes.

Dadurch, dass erfindungsgemäß zwischen verschiedenen Gegenstandssituationen im Überwachungsbereich unterschieden werden kann, z.B. wie anhand der Situationen in Fig. 4 und Fig. 5 beispielhaft erläutert, ermöglicht die Erfindung die Definition einer Mehrzahl von unterscheidbaren Sollpositionen und damit insbesondere auch Schaltpositionen. Wie eingangs bereits erwähnt, kann eine an die Empfangsanordnung 13 angeschlossene Auswerteeinrichtung hierzu mehrere Schaltausgänge aufweisen. Im Beispiel der Fig. 4 kann ein erster Ausgang schalten, wenn ein reflektornaher Gegenstand 11 gemäß Fig. 4a eine vorgegebene Eindringtiefe erreicht hat, während ein zweiter Ausgang schaltet, wenn ein nahe an der Empfangsanordnung 13 eindringender Gegenstand 11 gemäß Fig. 4b eine vorgegebene Eindringtiefe erreicht. Entsprechend kann in Fig. 5 für zwei Schaltausgänge der an die Empfangsanordnung 13 angeschlossenen Auswerteeinrichtung generell vorgegeben werden, dass nur bei einem bestimmten Abstand des Gegenstandes 11 von der Empfangsanordnung 13 geschaltet wird, wobei zusätzlich ein erster Ausgang bei einer relativ geringen Eindringtiefe gemäß Fig. 5b schaltet, wohingegen bezüglich eines zweiten Ausgangs ein Schaltvorgang ausgelöst wird, wenn eine relativ große Eindringtiefe gemäß Fig. 5b vorliegt.

Die Anzahl unterschiedlicher Gegenstandserfassungssignale bzw. Schaltpositionen sowie die Anzahl der unterschiedlichen Schaltausgänge der Auswerteeinrichtung sind erfindungsgemäß grundsätzlich beliebig.

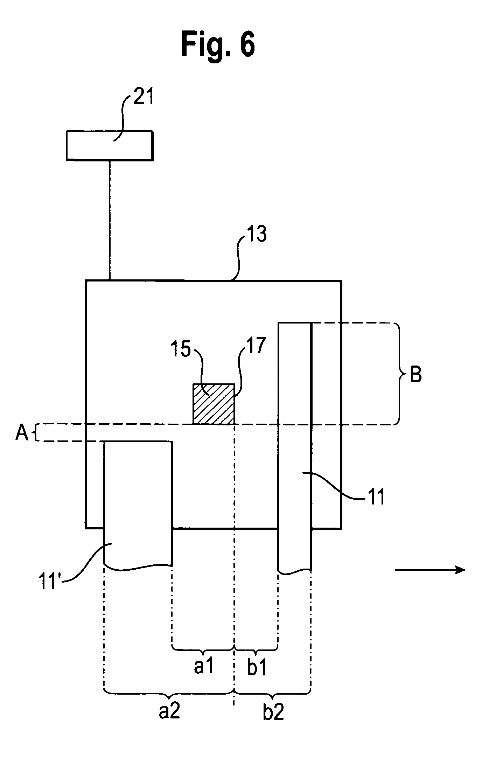

Fig. 6 veranschaulicht, wie mit der Erfindung verschiedene Bedingungen derart miteinander verknüpft werden können, dass ein Schaltsignal nur dann erzeugt wird, wenn diese Bedingungen gleichzeitig vorliegen.

In dem Beispiel der Fig. 6 soll ein Schaltsignal erzeugt werden, wenn ein erster Gegenstand 11, der eine bestimmte Dicke und Höhe aufweist, sich in der dargestellten Position befindet und gleichzeitig ein zweiter Gegenstand 11' mit geringerer Höhe und größerer Dicke die dargestellte weitere Position einnimmt.

Das Vorliegen dieser Bedingungen kann durch Bestimmen der in Fig. 6 angegebenen Abstände al, a2, A für den niedrigen und breiten Gegenstand 11' sowie der Abstände b1, b2 und B für den hohen schmalen Gegenstand 11 in Bezug auf die hier als Referenzmerkmal dienende Kante 17 des Referenzobjektes 15 festgestellt werden. Diese Abstände beziehen sich auf die oberen sowie die bezüglich der durch den Pfeil angedeutete Bewegungsrichtung der Gegenstände 11, 11' durch den Überwachungsbereich vorderen und hinteren Kanten des Referenzobjektes 15.

Als weitere Bedingungen für die Ausgabe eines Gegenstandserfassungssignals kommen nicht nur derartige geometrische Eigenschaften der Gegenstände 11, 11' in Frage. Alternativ oder zusätzlich kann bezüglich eines Gegenstandes 11 die Auswertung des Bildes z.B. auch hinsichtlich des Reflexions-, Remissions- bzw. Rückstreuungsverhaltens der Oberfläche des Gegenstandes erfolgen.

### Bezugszeichenliste

- 11: Gegenstand
- 12: Kante des Gegenstands
- 13: Empfangsanordnung
- 15: Referenzobjekt, Reflektor
- 17: Referenzmerkmal, Kante
- 19: Referenzmerkmal, Codierung
- 21: Auswerteeinrichtung
- 23: Mikrolinse
- 25: Empfängerlinse
- 27: Randstrahl
- 29: Kantenstrahlen

## Patentansprüche

1. Verfahren zur Erfassung eines Gegenstandes (11) in einem Überwachungsbereich, insbesondere zur Erzeugung von Schaltsignalen in Abhängigkeit von der Position des Gegenstandes (11) im Überwachungsbereich, mittels einer optoelektronischen Vorrichtung, insbesondere einer Lichtschranke,
bei dem von zumindest einer Lichtquelle ausgesandte und im Überwachungsbereich reflektierte, remittierte und/oder rückgestreute Lichtstrahlen von wenigstens einer Empfangsanordnung (13) erfasst werden und zumindest ein Gegenstandserfassungssignal, insbesondere ein Schaltsignal, ausgegeben wird,
**dadurch gekennzeichnet,**
**dass** der Lichtquelle wenigstens ein zur Reflexion, Remission und/oder Rückstreuung der ausgesandten Lichtstrahlen ausgebildetes, im Überwachungsbereich angeordnetes und/oder den Überwachungsbereich zumindest teilweise begrenzendes Referenzobjekt (15) zugeordnet wird, das zumindest ein mittels der Empfangsanordnung (13) detektierbares Referenzmerkmal (17, 19) aufweist, dass mittels der Empfangsanordnung (13) ein das Referenzmerkmal (17, 19) enthaltendes ortsaufgelöstes Bild des Überwachungsbereiches aufgenommen wird, und
**dass** das Gegenstandserfassungssignal ausgegeben wird, wenn durch Auswerten des ortsaufgelösten Bildes festgestellt wird, dass sich in dem aufgenommenen Bild ein im Überwachungsbereich befindlicher Gegenstand (11) in einer vorgegebenen Sollposition, insbesondere einer Schaltposition, relativ zu dem Referenzmerkmal (17, 19) befindet.

2. Verfahren nach Anspruch 1,
**dadurch gekennzeichnet,**
**dass** die Empfangsanordnung (13) und das Referenzobjekt (15) derart ausgelegt und/oder relativ zueinander ausgerichtet werden, dass zumindest bezüglich einer Richtung, in der ein Eindringen eines Gegenstandes (11) in den Überwachungsbereich erwartet wird, in dem mittels der Empfangsanordnung (13) aufgenommenen Bild des Überwachungsbereiches das Referenzmerkmal (17, 19) von einem Rand des Bildes entfernt gelegen ist.

3. Verfahren nach Anspruch 1 oder 2,
**dadurch gekennzeichnet,**
**dass** das Bild hinsichtlich der Lichtverteilung auf einer Vielzahl von individuell auswertbaren, in einer ein- oder zweidimensionalen Anordnung vorgesehenen Empfangselementen, insbesondere Subpixeln, der Empfangsanordnung (13) ausgewertet wird.

4. Verfahren nach Anspruch 3,
**dadurch gekennzeichnet,**
**dass** die Empfangselemente zu einer Vielzahl von individuell auswertbaren Gruppen, insbesondere Makropixeln, zusammengefasst werden und das Bild zusätzlich hinsichtlich der Lichtverteilung jeweils innerhalb der Gruppen ausgewertet wird.

5. Verfahren nach einem der vorhergehenden Ansprüche,
**dadurch gekennzeichnet,**
**dass** im Überwachungsbereich ein zumindest im Wesentlichen kollimierter Strahlengang erzeugt wird.

6. Verfahren nach einem der Ansprüche 1 bis 4,
**dadurch gekennzeichnet,**
**dass** im Überwachungsbereich ein Strahlengang erzeugt wird, bei dem die Lichtverteilung auf der Empfangsanordnung (13) von der Lage des Gegenstandes (11) entlang der optischen Achse der Vorrichtung abhängig ist.

7. Verfahren nach einem der vorhergehenden Ansprüche,
**dadurch gekennzeichnet,**
**dass** eine Mehrzahl von unterschiedlichen Sollpositionen vorgegeben wird, für die jeweils ein Gegenstandserfassungssignal ausgegeben wird, wobei vorzugsweise die Ausgabe der Gegenstandserfassungssignale derart erfolgt, dass zwischen den Sollpositionen unterschieden werden kann.

8. Verfahren nach Anspruch 7,
**dadurch gekennzeichnet,**
**dass** sich die Sollpositionen hinsichtlich ihrer Lage entlang einer optischen Achse der Vorrichtung und/oder hinsichtlich ihrer Lage entlang einer senkrecht zur optischen Achse der Vorrichtung verlaufenden Achse voneinander unterscheiden.

9. Verfahren nach einem der vorhergehenden Ansprüche,
**dadurch gekennzeichnet,**
**dass** das Bild hinsichtlich wenigstens einer weiteren, mittels der Empfangsanordnung (13) detektierbaren Eigenschaft des Gegenstandes (11), insbesondere dessen Form und/oder Größe, ausgewertet wird, wobei vorzugsweise die Feststellung, dass der Gegenstand (11) die vorgegebene Eigenschaft aufweist, eine zusätzliche Bedingung für die Ausgabe eines Gegenstandserfassungssignals ist.

10. Verfahren zum Festlegen wenigstens einer, insbesondere als Schaltposition dienenden, Sollposition zumindest eines sich in dem Überwachungsbereich einer optoelektronischen Vorrichtung, insbesondere einer Lichtschranke, nach einem der Ansprüche 11 bis 14 befindlichen Gegenstandes,
bei dem die Sollposition in dem mittels der Empfangsanordnung (13) aufgenommenen Bild als die Lage des Gegenstandes (11) relativ zu dem Referenzmerkmal (17, 19) festgelegt wird.

11. Optoelektronische Vorrichtung, insbesondere Lichtschranke, zur Erfassung eines Gegenstandes (11) in einem Überwachungsbereich, insbesondere zur Erzeugung von Schaltsignalen in Abhängigkeit von der Position des Gegenstandes (11) im Überwachungsbereich, mit zumindest einer Lichtquelle zur Aussendung von Lichtstrahlen in den Überwachungsbereich, wenigstens einer Empfangsanordnung (13) zur Erfassung von im Überwachungsbereich reflektierten, remittierten und/oder rückgestreuten Lichtstrahlen und einer Auswerteeinrichtung (21) zur Ausgabe eines Gegenstandserfassungssignals, insbesondere eines Schaltsignals,
**dadurch gekennzeichnet,**
**dass** die Empfangsanordnung (13) dazu ausgebildet ist, ein ortsaufgelöstes Bild des Überwachungsbereiches aufzunehmen, das ein Referenzmerkmal (17, 19) eines zur Reflexion, Remission und/oder Rückstreuung der ausgesandten Lichtstrahlen ausgebildeten, im Überwachungsbereich angeordneten und/oder den Überwachungsbereich zumindest teilweise begrenzenden Referenzobjektes (15) enthält, und
**dass** die Auswerteeinrichtung (21) dazu ausgebildet ist, in dem aufgenommenen Bild die Position eines im Überwachungsbereich befindlichen Gegenstandes (11) relativ zu dem Referenzmerkmal (17, 19) zu bestimmen und das Gegenstandserfassungssignal auszugeben, wenn festgestellt wird, dass sich der Gegenstand (11) in einer vorgegebenen Sollposition, insbesondere einer Schaltposition, relativ zu dem Referenzmerkmal (17, 19) befindet.

12. Optoelektronische Vorrichtung nach Anspruch 11,
**dadurch gekennzeichnet,**
**dass** die Empfangsanordnung (13) wenigstens einen ortsauflösenden Empfänger umfasst, der eine ein- oder zweidimensionale Anordnung einer Vielzahl von individuell auswertbaren Empfangselementen, insbesondere Subpixeln, aufweist.

13. Optoelektronische Vorrichtung nach Anspruch 12,
**dadurch gekennzeichnet,**
**dass** die Empfangselemente zu einer Vielzahl von individuell auswertbaren Gruppen, insbesondere Makropixeln, zusammengefasst sind, wobei insbesondere die Gruppen zusätzlich jeweils hinsichtlich der Lichtverteilung auf den die jeweilige Gruppe bildenden Empfangselementen auswertbar sind.

14. Optoelektronische Vorrichtung nach Anspruch 13,
**dadurch gekennzeichnet,**
**dass** zur Bildung der Gruppen eine Anordnung von Mikrolinsen (23) vorgesehen ist, denen jeweils eine Mehrzahl von Empfangselementen zugeordnet ist.

15. Verwendung einer optoelektronischen Vorrichtung, insbesondere einer Lichtschranke, nach einem der Ansprüche 11 bis 14 zur Erzeugung von Schaltsignalen in Abhängigkeit von der Position des Gegenstandes (11) im Überwachungsbereich,
wobei als Gegenstandserfassungssignal wenigstens ein Schaltsignal ausgegeben wird, wenn festgestellt wird, dass sich ein Gegenstand (11) in einer vorgegebenen Sollposition befindet.
